# EUROPÄISCHE PATENTSCHRIFT

(11) **EP 3 174 664 B1**
(45) Veröffentlichungstag und Bekanntmachung des Hinweises auf die Patenterteilung: **08.07.2020**
(21) Anmeldenummer: 15738024.7
(22) Anmeldetag: 09.07.2015
(51) Int. Cl.: B23K 35/28, B23K 9/20, B23K 35/02

(54) **SCHWEISSBOLZEN ZUM HUBZÜNDUNGSSCHWEISSEN**
WELD STUD FOR DRAWN-ARC STUD WELDING
GOUJON À SOUDER POUR SOUDAGE À AMORÇAGE PAR ARC TIRÉ

(30) Priorität: 30.07.2014 DE 102014214932
(43) Veröffentlichungstag der Anmeldung: 07.06.2017
(73) Patentinhaber: Bayerische Motoren Werke Aktiengesellschaft, 80809 München (DE)
(72) Erfinder: HOLZNER, Reinhard, 94419 Reisbach (DE); KERSCHER, Erich, 84152 Mengkofen (DE)
(86) Internationale Anmeldenummer: PCT/EP2015/065647
(87) Internationale Veröffentlichungsnummer: WO 2016/015968

(56) Entgegenhaltungen:
- EP-A1- 0 526 164
- WO-A2-01/70442
- DE-A1- 3 022 054
- DE-A1-102011 076 261
- US-A- 3 010 011
- US-A- 6 077 096

## Beschreibung

Beim Hubzündungsschweißen wird ein Metallbolzen auf ein Bauteil aufgeschweißt. Hierzu wird ein Lichtbogen zwischen der Stirnfläche des Bolzens und dem Bauteil gezündet. Der Bolzen wird zunächst auf das Bauteil aufgesetzt und ein Pilotstrom wird eingeschaltet. Durch ein geringfügiges Anheben des Metallbolzens vom Bauteil wird der Lichtbogen gezogen. Beide Teile werden aufgeschmolzen und durch geringen Druck miteinander gefügt.

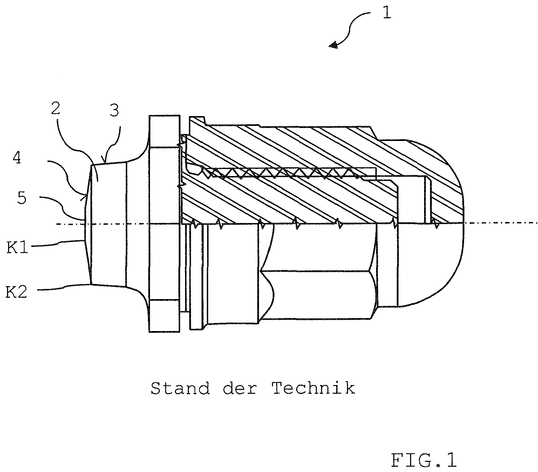

Schweißbolzen zum Hubzündungsschweißen weisen üblicherweise einen Funktionsabschnitt auf, der im verschweißten Zustand die Befestigung von Bauteilen oder Komponenten ermöglicht, und einen Schweißabschnitt, mit dem sie an ein Bauteil geschweißt werden. Der Schweißabschnitt soll während des Schweißvorgangs zumindest teilweise aufgeschmolzen werden und eine stoffschlüssige Verbindung mit dem Bauteil eingehen. Figur 1 zeigt einen herkömmlichen Schweißbolzen 1 zum Hubzündungsschweißen. Der Schweißabschnitt 2 ist konusförmig ausgebildet mit einer Mantelfläche 3 und weist an seinem freien Ende eine Stirnfläche 4 auf in Form eines flachen Kegelstumpfs, der in einem ebenen Abschnitt 5 endet. Die Stirnfläche 4 beinhaltet somit zwei Kanten, eine erste Kante K1, die den ebenen Abschnitt 5 begrenzt und eine zweite Kante K2 am Übergang zwischen Stirnfläche 4 und Mantelfläche 3. Für das Verschweißen wird der Schweißbolzen 1 mit dem ebenen Abschnitt 5 der Stirnfläche 4 zunächst auf das Bauteil aufgesetzt und dann von diesem entfernt, wodurch der Lichtbogen zwischen Bauteil und Stirnfläche 4 zündet.

Mit dieser Bolzenform kann jedoch häufig nur eine unzureichende Güte der Schweißverbindung erreicht werden. So kommt es im Schweißbereich zu Störungen durch ein ungleichmäßiges, einseitiges Abschmelzen des Schweißflansches bzw. ein ungleichmäßiges Aufschmelzen des Bauteils. Hierdurch wird der Schweißwulst ungleichmäßig ausgebildet und es kommt zu einer Schiefstellung des Bolzens. Weiterhin tritt z. B. bei zu hoher Schweißenergie ein Verdampfen des im Randbereich der Stirnfläche liegenden Materials auf, wodurch die Festigkeit der Fügeverbindung nicht mehr sichergestellt ist.

Weiterhin ist aus der Druckschrift DE 10 2011 076 261 A1 ein Anschweißelement bekannt, welches ein Anschweißende und einen dazu beabstandet angeordneten Funktionsabschnitt aufweist, bei welchem zwischen dem Anschweißende und dem Funktionsbereich ein Körper angeordnet ist, der als Schweißbolzen ausgeführt ist. Das Anschweißende kann pilzkopfartig ausgeführt sein, wobei das Anschweißende im Schnitt kreisabschnittsartig ausgeführt ist, wodurch die effektive Schweißfläche verkleinert wird.

Die Druckschrift US 3 010 011 offenbart ein Verfahren zum Kondensatorentladungsschweißen mit Spitzenzündung. Die verwendeten Schweißbolzen weisen konvex geformte Stirnflächen auf. Der erforderliche hochohmige Kontakt zwischen Bauteil und Bolzen wird dadurch erzielt, dass in dem Bauteil eine Vertiefung ausgebildet wird, so dass ein möglichst kleiner, vorzugsweise linienförmiger Kontakt zwischen Bauteil und Bolzen am Rande der Vertiefung hergestellt wird.

Der Erfindung liegt daher die Aufgabe zugrunde, einen Schweißbolzen anzugeben, mit dem auch bei nicht optimaler Abstimmung der Schweißparameter ein gleichmäßiges Abschmelzen erreicht werden kann und eine verbesserte Güte der Schweißverbindung erzielt werden kann.

Diese Aufgabe wird durch einen Schweißbolzen nach Patentanspruch 1 und eine Verwendung des Schweißbolzens nach Anspruch 7 gelöst.

Der erfindungsgemäße Schweißbolzen zum Hubzündungsschweißen hat einen Funktionsabschnitt und einen Schweißabschnitt, wobei der Schweißabschnitt ein Ende des Schweißbolzens bildet und durch eine in Längsrichtung des Schweißbolzens nach außen gewölbte Stirnfläche begrenzt wird.

Der Erfindung liegt die Erkenntnis zugrunde, dass durch Ausbildung einer Stirnfläche mit nach außen gewölbter Form der Tendenz des Lichtbogens entgegengewirkt werden kann, an der Kante der Bolzenstirnfläche entlang zu laufen. Aufgrund der konvexen Form der Stirnfläche wandert der Lichtbogen nicht zu einer bestimmten Stelle, wodurch die Gleichmäßigkeit der Aufschmelzung deutlich gesteigert werden kann.

Der Funktionsabschnitt des Schweißbolzens dient zur Befestigung eines Bauteils oder einer Komponente und kann mit Außen- oder Innengewinde ausgeführt sein oder andere für die vorgesehene Funktion geeignete Formen aufweisen, wie z.B. einen Haken, eine Öse, einen oder mehrere Stifte etc.

Der Schweißabschnitt ist der Abschnitt des Schweißbolzens, der beim Schweißen zumindest teilweise aufgeschmolzen wird und eine stoffschlüssige Verbindung mit dem Bauteil eingeht.

In einer bevorzugten Ausführungsform ist die Stirnfläche rotationssymmetrisch zu einer Längsachse des Schweißbolzens ausgebildet und weist insbesondere die Form eines Kugelsegments, eines Segments eines Ellipsoids oder eines Segments eines elliptischen Paraboloids auf.

Eine besonders einheitliche Aufschmelzung kann erreicht werden, wenn die Stirnfläche in Längsrichtung des Schweißbolzens eine Wölbungshöhe von mindestens 1,5 mm oder mehr und insbesondere von 2 mm und mehr aufweist.

Gemäß der Erfindung kann die Gleichmäßigkeit der Aufschmelzung weiter gesteigert werden, indem die Stirnfläche stetig und kantenfrei in eine den Schweißabschnitt begrenzende Seitenfläche übergeht, d.h. Stirnfläche und Seitenfläche haben an ihrer gemeinsamen Grenze eine gemeinsame Tangente.

Erfindungsgemäß grenzt an die Stirnfläche ein konischer Abschnitt an, dessen Durchmesser sich von dem Durchmesser der Stirnfläche mit zunehmendem Abstand von dieser verbreitert.

Zur Steigerung der Gesamtfestigkeit kann die Stirnfläche bei einem Schweißbolzen, dessen Funktionsabschnitt ein Gewinde aufweist, einen Durchmesser aufweisen, der mindestens so groß ist wie der Kerndurchmesser des Gewindes.

Der Schweißbolzen kann vorzugsweise einstückig gefertigt sein oder der Schweißabschnitt und der Funktionsabschnitt können aus verschiedenen Materialien bestehen und miteinander stoffschlüssig verbunden sein. In einer Ausgestaltung ist der Schweißbolzen einstückig aus einer Aluminiumlegierung gefertigt.

Der voranstehend beschriebene Schweißbolzen kann insbesondere für das Hubzündungsschweißen an einer Fahrzeugkarosserie, an Fahrwerkskomponenten oder im Bereich der Batterie- oder Akkumulatortechnik (z.B. Hochvoltspeicher) verwendet werden. Der erfindungsgemäße Schweißbolzen führt zu einer konstanteren Qualität der Bolzenschweißungen mit geringeren Ausfällen und ist unempfindlich gegen Prozessstörungen.

Weitere vorteilhafte Ausgestaltungen der Erfindung ergeben sich aus den Unteransprüchen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele. Sofern in dieser Anmeldung der Begriff "kann" verwendet wird, handelt es sich sowohl um die technische Möglichkeit als auch um die tatsächliche technische Umsetzung.

Im Folgenden werden Ausführungsbeispiele an Hand der beiliegenden Zeichnungen erläutert. Darin zeigen:
- Figur 1: einen Schweißbolzen gemäß dem Stand der Technik
- Figur 2: einen Schweißbolzen gemäß einem Ausführungsbeispiel der Erfindung;

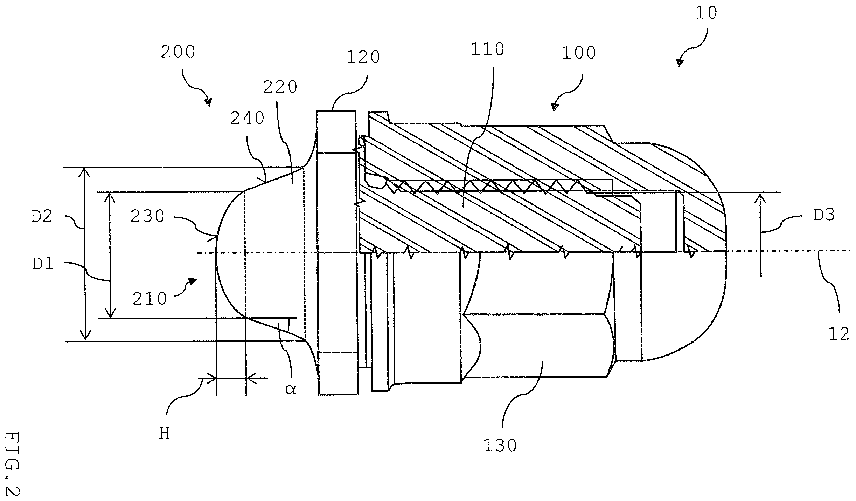

Der in Figur 2 gezeigte Schweißbolzen 10 mit einer Längsachse 12 weist einen Funktionsabschnitt 100 und einen Schweißabschnitt 200 auf. Der Funktionsabschnitt 100 beinhaltet einen Gewindebolzen 110 und einen, am Fuße des Funktionsabschnitts 100 ausgebildeten, Achtkantflansch 120. Auf dem Gewindebolzen ist eine Hutmutter 130 vormontiert.

Der Schweißabschnitt 200 grenzt an den Achtkantflansch 130 des Funktionsabschnitts 100 an. Da der Schweißabschnitt 200 rotationssymmetrisch zur Längsachse 12 ausgebildet ist, ist lediglich eine Seitenansicht gezeigt. Der Schweißabschnitt 200 hat, entlang der Längsachse 12 des Schweißbolzens 10 betrachtet, eine zum freien Ende 210 konvergierende Form mit einem konischen Abschnitt 220, der in eine nach außen gewölbte Stirnfläche 230 übergeht. Zu den Seiten wird der Schweißabschnitt 200 durch eine Seitenfläche 240 begrenzt.

Die Stirnfläche 230 hat gemäß Figur 2 die Form eines Segments eines Rotationsellipsoids, wobei die Längsachse 12 des Schweißbolzens der Rotationsachse des Ellipsoids entspricht. Die Stirnfläche 230 hat eine Wölbungshöhe H in Richtung der Längsachse 12 des Schweißbolzens und einen Durchmesser D1 quer zur Längsachse 12. Der Durchmesser D1 der Stirnfläche 230 ist größer als der Kerndurchmesser D3 des Gewindebolzens 110.

Der konische Abschnitt 220 ist in der Figur 2 durch die strichlierten Linien verdeutlicht. Der konische Abschnitt 220 schließt unmittelbar an die Stirnfläche 230 an und hat dort ebenfalls den Durchmesser D1. Mit zunehmendem Abstand vom freien Ende 210 steigt der Durchmesser des konischen Abschnitts 220 bis auf den Durchmesser D2 an. Die Mantelfläche des konischen Abschnitts 220 ist um einen Winkel α gegenüber der Längsachse 12 des Schweißbolzens 10 geneigt. Der Winkel α liegt vorzugsweise in einem Bereich von 15 bis 25 Grad und insbesondere in einem Bereich von 20 bis 24 Grad. Beispielsweise beträgt bei einem Schweißbolzen, der einen Gewindebolzen mit M10-Außengewinde mit einem Kerndurchmesser von D3=8,16 mm aufweist, der Durchmesser D1 9mm, der Durchmesser D2 11 mm und die Wölbungshöhe H 2mm.

Die Stirnfläche 210 und die Seitenfläche 240 gehen stetig und kantenfrei ineinander über, d.h. Stirnfläche 210 und Seitenfläche 240 haben an ihrer gemeinsamen Grenze eine gemeinsame Tangente. Gemäß Figur 2 ist der Schweißabschnitt 200 vollständig kantenfrei ausgebildet, d.h. vom konischen Abschnitt bis zum Achtkantflansch hat die Seitenfläche 240 ebenfalls einen stetigen Verlauf.

Obwohl in den Figuren ein Schweißbolzen mit Außengewinde und vormontierter Hutmutter gezeigt ist, können alternativ andere Arten von Schweißbolzen verwendet werden. Ebenso kann die Stirnfläche andere nach außen gewölbte Formen aufweisen.

Die Ausführungsbeispiele sind nicht maßstabsgetreu und nicht beschränkend. Abweichungen im Rahmen des fachmännischen Handelns sind möglich.

### Bezugszeichenliste

- 1: Schweißbolzen
- 2: Schweißabschnitt
- 3: Mantelfläche
- 4: Stirnfläche
- 5: ebener Abschnitt
- 10: Schweißbolzen
- 12: Längsachse
- 100: Funktionsabschnitt
- 110: Gewindebolzen
- 120: Achtkantflansch
- 130: Hutmutter
- 200: Schweißabschnitt
- 210: freies Ende
- 220: konischer Abschnitt
- 230: Stirnfläche
- 240: Seitenfläche
- D1, D2, D3: Durchmesser
- H: Wölbungshöhe
- K1, K2: Kante

## Patentansprüche

1. Schweißbolzen, der zum Hubzündungsschweißen verwendet wird, mit:
einem Funktionsabschnitt (100) und
einem Schweißabschnitt (200), der ein Ende des Schweißbolzens (10) bildet und durch eine in Längsrichtung des Schweißbolzens (10) nach außen gewölbte Stirnfläche (230) begrenzt wird und
bei dem die Stirnfläche (230) stetig und kantenfrei in eine den Schweißabschnitt (200) begrenzende Seitenfläche (240) übergeht,
wobei
der Schweißabschnitt (200) einen an die Stirnfläche (230) angrenzenden konischen Abschnitt (220) aufweist, dessen Durchmesser sich von dem Durchmesser der Stirnfläche (D1) mit zunehmendem Abstand von dieser verbreitert.

2. Schweißbolzen nach Patentanspruch 1, bei dem
die Stirnfläche (230) rotationssymmetrisch zu einer Längsachse (12) des Schweißbolzens (10) ausgebildet ist.

3. Schweißbolzen nach Patentanspruch 2, bei dem die Stirnfläche (230) die Form eines Kugelsegments, eines Segments eines Ellipsoids oder eines Segments eines elliptischen Paraboloids aufweist.

4. Schweißbolzen nach einem der Patentansprüche 1 bis 3, bei dem die Stirnfläche (230) in Längsrichtung des Schweißbolzens (10) eine Wölbungshöhe (H) von mindestens 1,5 mm oder mehr und insbesondere von 2 mm und mehr aufweist.

5. Schweißbolzen nach einem der Patentansprüche 1 bis 4,
wobei der Funktionsabschnitt (100) ein Gewinde aufweist und die Stirnfläche (230) einen Durchmesser (D1) hat, der mindestens so groß ist wie ein Kerndurchmesser (D3) des Gewindes.

6. Schweißbolzen nach einem der Patentansprüche 1 bis 5,
der einstückig aus einer Aluminiumlegierung gefertigt ist.

7. Verwendung des Schweißbolzens nach einem der Patentansprüche 1 bis 6 für das Hubzündungsschweißen an einer Fahrzeugkarosserie, an Fahrwerkskomponenten oder im Bereich der Batterie- oder Akkumulatortechnik.

## Claims

1. Weld stud which is used for drawn-arc stud welding, having:
a functional section (100) and
a welding section (200) which forms an end of the weld stud (10) and which is delimited by a face surface (230) which is domed outwardly in the longitudinal direction of the weld stud (10) and
in which the face surface (230) transitions in continuous fashion, without an edge, into a side surface (240) which delimits the welding section (200),
wherein
the welding section (200) has a conical section (220) which adjoins the face surface (230) and whose diameter widens, proceeding from the diameter of the face surface (D1), with increasing distance from said face surface.

2. Weld stud according to Patent Claim 1, in which the face surface (230) is of rotationally symmetrical form with respect to a longitudinal axis (12) of the weld stud (10).

3. Weld stud according to Patent Claim 2, in which the face surface (230) has the shape of a spherical segment, of a segment of an ellipsoid or of a segment of an elliptical paraboloid.

4. Weld stud according to one of Patent Claims 1 to 3, in which the face surface (230) has, in the longitudinal direction of the weld stud (10), a dome height (H) of at least 1.5 mm or more and in particular of 2 mm and more.

5. Weld stud according to one of Patent Claims 1 to 4, wherein the functional section (100) has a thread, and the face surface (230) has a diameter (D1) which is at least as large as a core diameter (D3) of the thread.

6. Weld stud according to one of Patent Claims 1 to 5, which is manufactured in one piece from an aluminum alloy.

7. Weld stud according to one of Patent Claims 1 to 6 for drawn-arc stud welding on a vehicle body, on chassis components or in the field of battery or accumulator technology.

## Revendications

1. Goujon à souder, utilisé pour le soudage à amorçage par arc tiré, comprenant :
une portion fonctionnelle (100) et
une portion à souder (200) qui forme une extrémité du goujon à souder (10) et qui est limitée par une surface frontale (230) courbée vers l'extérieur dans la direction longitudinale du goujon à souder (10) et
dans lequel la surface frontale (230) se prolonge de manière continue et sans arête par une surface latérale (240) limitant la portion à souder (200),
la portion à souder (200) présentant une portion conique (220) adjacente à la surface frontale (230), dont le diamètre s'élargit depuis le diamètre de la surface frontale (D1) en s'éloignant de celle-ci.

2. Goujon à souder selon la revendication 1, dans lequel la surface frontale (230) est réalisée avec une symétrie de révolution par rapport à un axe longitudinal (12) du goujon à souder (10).

3. Goujon à souder selon la revendication 2, dans lequel la surface frontale (230) présente la forme d'un segment de sphère, d'un segment d'ellipsoïde ou d'un segment de paraboloïde elliptique.

4. Goujon à souder selon l'une quelconque des revendications 1 à 3, dans lequel la surface frontale (230) présente, dans la direction longitudinale du goujon à souder (10), une hauteur de cintrage (H) d'au moins 1,5 mm ou plus et notamment de 2 mm et plus.

5. Goujon à souder selon l'une quelconque des revendications 1 à 4, dans lequel la portion fonctionnelle (100) présente un filetage et la surface frontale (230) présente un diamètre (D1) qui est au moins aussi grand qu'un diamètre de noyau (D3) du filetage.

6. Goujon à souder selon l'une quelconque des revendications 1 à 5, qui est fabriqué d'une seule pièce à partir d'un alliage d'aluminium.

7. Utilisation du goujon à souder selon l'une quelconque des revendications 1 à 6 pour le soudage à amorçage par arc tiré, sur une carrosserie de véhicule, sur les composants de châssis ou dans le domaine de la technique des batteries ou des accumulateurs.
